(19) **Europäisches Patentamt**
**European Patent Office**
**Office européen des brevets**

(11) **EP 0 744 724 B1**

(12) **EUROPÄISCHE PATENTSCHRIFT**

(45) Veröffentlichungstag und Bekanntmachung des Hinweises auf die Patenterteilung:
**08.08.2001  Patentblatt 2001/32**

(51) Int Cl.7: **G08C 19/02**

(21) Anmeldenummer: **95108008.4**

(22) Anmeldetag: **24.05.1995**

(54) **Anordnung zur leitungsgebundenen Energieversorgung eines Signalgebers vom Singnalempfänger**

Device for power supply by wire of a signal transmitter by the signal receiver

Dispositif d'alimentation d'énergie par fil d'un émetteur de signal par le récepteur du signal

(84) Benannte Vertragsstaaten:
**DE FR GB IT**

(43) Veröffentlichungstag der Anmeldung:
**27.11.1996  Patentblatt 1996/48**

(73) Patentinhaber: **ENDRESS + HAUSER GMBH + CO.**
**D-79689 Maulburg (DE)**

(72) Erfinder:
• **Wetzel, Gustav**
**D-79539 Lörrach (DE)**

• **Meier, Jürgen**
**D-79689 Maulburg (DE)**

(74) Vertreter: **Leiser, Gottfried, Dipl.-Ing.**
**Prinz & Partner GbR**
**Manzingerweg 7**
**81241 München (DE)**

(56) Entgegenhaltungen:
**EP-A- 0 244 808          US-A- 4 777 331**

## Beschreibung

Die Erfindung betrifft eine Anordnung zur Signalübertragung zwischen einer Geberstelle und einer Empfangsstelle, die miteinander durch eine Zweidrahtleitung verbunden sind, über die einerseits der für den Betrieb der Geberstelle erforderliche Versorgungsstrom von der Empfangsstelle zur Geberstelle übertragen wird, und über die andererseits ein zwischen zwei Grenzwerten veränderlicher analoger Signalstrom von der Geberstelle zur Empfangsstelle übertragen wird, der sich aus dem Versorgungsstrom für die Geberstelle und einem von der Geberstelle bestimmten Ergänzungsstrom zusammensetzt und dem ein symmetrischer Kommunikationsstrom zur Übertragung von Kommunikations-Informationen zwischen der Geberstelle und der Empfangsstelle überlagert wird, wobei die Geberstelle eine Versorgungsschaltung aufweist, die einen Spannungsregler zur Konstanthaltung der Betriebsspannung der Geberstelle und einen Energiespeicher zum Ausgleich von Strom-und/oder Spannungsschwankungen enthält.

Bei den üblichen Anordnungen dieser Art liegt in einem parallel zur Versorgungsschaltung an die Zweidrahtleitung angeschlossenen Nebenschlußzweig eine gesteuerte Stromquelle, die den Ergänzungsstrom entsprechend dem zu übertragenden Signalstrom über den Nebenschlußzweig fließen läßt.

Solche Anordnungen sind beispielsweise aus der EP-A-0 244 808 oder der US-A-4 777 331 bekannt. Beide Druckschriften beschreiben Vorrichtungen bzw. Verfahren, die sicherstellen sollen, daß die analogen Strom-Meßsignale auf der Zweidrahtleitung nicht durch Kommunikationssignale, wie beispielsweise Test-, Justier- und Eichsignale, verfälscht werden, die durch zusätzlich und zeitlich befristet auf die Zweidrahtleitung geschaltete Handgeräte generiert werden.

Erfindungsgemäß wird eine Anordnung der eingangs angegebenen Art geschaffen, bei der eine steuerbare Stromquelle den gesamten von der Zweidrahtleitung in die Versorgungsschaltung fließenden Strom bestimmt.

Eine vorteilhafte Weiterbildung der Erfindung ist im Anspruch 2 gekennzeichnet.

Weitere Merkmale und Vorteile der Erfindung ergeben sich aus der folgenden Beschreibung eines Ausführungsbeispiels an Hand der Zeichnungen. In den Zeichnungen zeigen:

Fig. 1    eine schematische Darstellung einer Anordnung zur Signalübertragung zwischen einer Geberstelle und einer Empfangsstelle,

Fig. 2    ein Diagramm der in der Anordnung von Fig. 1 übertragenen Signale und

Fig. 3    ein Schaltbild der Geberstelle von Fig. 1, das die Ausbildung der steuerbaren Stromquelle und der Steuerschaltung in näheren Einzelheiten zeigt.

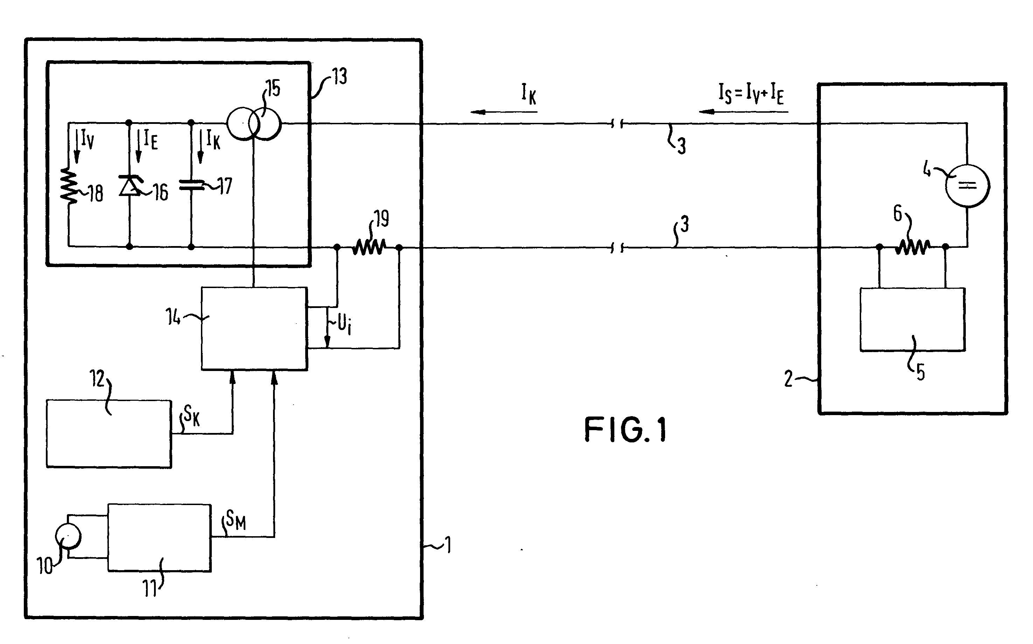

Figur 1 der Zeichnung zeigt schematisch eine Geberstelle 1, die mit einer Empfangsstelle 2 über eine Zweidrahtleitung 3 verbunden ist. Die Geberstelle 1 ist bei dem dargestellten Beispiel eine Meßstelle, in der eine physikalische Meßgröße (z.B. Temperatur, Druck, Feuchtigkeit, Füllstand, Durchfluß) gemessen wird. Die Geberstelle 1 enthält keine eigene Energiequelle, sondern bezieht den für ihren Betrieb erforderlichen Versorgungsstrom $I_V$ über die Zweidrahtleitung 3 von einer in der Empfangsstelle 2 enthaltenen Spannungsquelle 4. Über die gleiche Zweidrahtleitung 3 wird ein den Augenblickswert der Meßgröße darstellendes Meßwertsignal von der Geberstelle 1 zur Empfangsstelle 2 übertragen. Einer üblichen Technik entsprechend ist das Meßwertsignal ein über die Zweidrahtleitung 3 fließender Signalstrom $I_S$, der sich aus dem Versorgungsstrom $I_V$ der Geberstelle 1 und einem Ergänzungsstrom $I_E$ zusammensetzt:

$$I_S = I_V + I_E$$

Der Ergänzungsstrom $I_E$ wird gleichfalls der Spannungsquelle 4 entnommen und in der Geberstelle 1 unter Berücksichtigung der jeweiligen Größe des Versorgungsstroms $I_V$ so eingestellt, daß der Signalstrom $I_S$ zwischen zwei vorgegebenen Stromwerten (üblicherweise den Stromwerten 4 mA und 20 mA) den zu übertragenden Meßwert darstellt. Die Spannungsquelle 4 ist eine Gleichspannungsquelle, und die Ströme $I_V$, $I_E$ und $I_S$ sind Gleichströme.

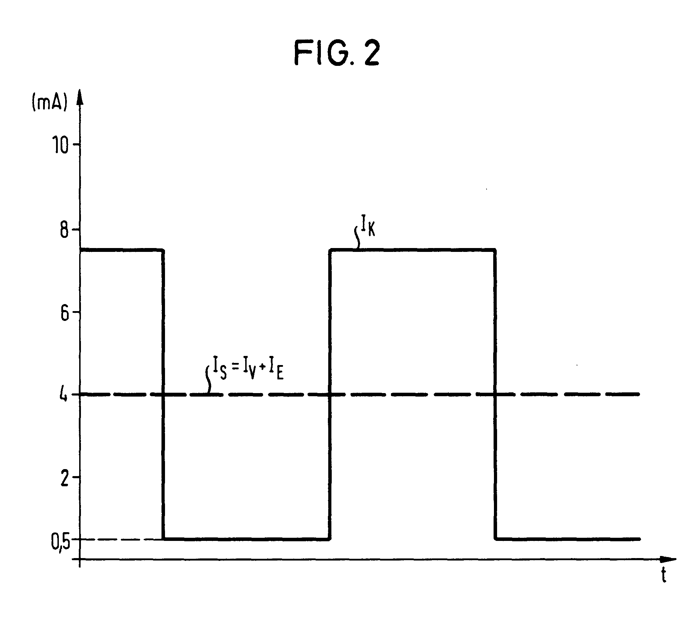

Zur Erfassung der physikalischen Meßgröße enthält die Geberstelle 1 einen Sensor 10 und einen mit dem Sensor 10 verbundenen Meßwandler 11, der ein elektrisches Signal $S_M$ abgibt, das stets den Augenblickswert der Meßgröße darstellt. Die Geberstelle 1 enthält ferner eine Kommunikationseinheit 12, die es ermöglicht, über die Zweidrahtleitung 3 zusätzliche Informationen von der Geberstelle zur Empfangsstelle zu übertragen, ohne daß die Meßwertübertragung dadurch gestört wird. Die Informationsübertragung erfolgt dadurch, daß dem Signalstrom $I_S$ ein symmetrischer Kommunikationsstrom $I_K$ in Form eines Wechselstroms überlagert wird, der in positiver und negativer Richtung gleiche Strom-Zeit-Flächen aufweist, so daß der Signalstrom $I_S$ im Mittel dadurch nicht beeinflußt wird. Figur 2 zeigt den über die Zweidrahtleitung 3 übertragenen Signalstrom $I_S$, der sich aus dem Versorgungsgleichstrom $I_V$ und dem Ergänzungsstrom $I_E$ zusammensetzt und dem der Kommunikationsstrom $I_K$ in Form symmetrischer Rechteck-Wechselimpulse überlagert ist. Die symmetrischen Rechteck-Wechselimpulse des Kommunikationsstroms $I_K$ können mit den zu übertragenden Informationen beispielsweise pulscodemoduliert sein.

Die Empfangsstelle 2 enthält eine Auswerteschaltung 5, die aus dem über die Zweidrahtleitung 3 übertragenen Gesamtstrom einerseits die Meßwertinformation und andererseits die Kommunikations-Information gewinnt. Zu diesem Zweck ist in die Zweidrahtleitung ein Widerstand 6 eingefügt, an dem eine Spannung entsteht, die dem über die Zweidrahtleitung übertragenen Gesamtstrom proportional ist und die der Auswerteschaltung 5 zugeführt wird.

Zur Durchführung der zuvor geschilderten Funktionen:

- Stromversorgung der verschiedenen Verbraucher in der Geberstelle;
- Einstellung des Signalstroms $I_S$ entsprechend dem zu übertragenden Meßwert;
- Überlagerung des symmetrischen Kommunikationsstroms $I_K$ über den Signalstrom $I_S$;

enthält die Geberstelle 1 eine Versorgungsschaltung 13 und eine Steuerschaltung 14. Die Versorgungsschaltung 13 enthält eine steuerbare Stromquelle 15, die in die Zweidrahtleitung 3 eingefügt ist, und eine Z-Diode 16, die parallel zu einem Kondensator 17 hinter der Stromquelle 15 an die Zweidrahtleitung angeschlossen ist. Der in Figur 1 dargestellte Widerstand 18 repräsentiert symbolisch den Gesamtwiderstand der in der Geberstelle 1 vorhandenen Stromverbraucher, die in erster Linie durch den Meßwandler 11 mit dem Sensor 10, die Kommunikations-Einheit 12 und die Steuerschaltung 14 gebildet sind. Die Z-Diode 16 dient der Konstanthaltung der Betriebsspannung in der Geberstelle 1, und der Kondensator 17 bildet einen Energiespeicher zum Ausgleich von Strom-oder Spannungsschwankungen.

Die Steuerschaltung 14 bestimmt den von der Stromquelle 15 erzwungenen Gesamtstrom, der über die Zweidrahtleitung 3 fließt. Sie empfängt einerseits das vom Meßwandler 11 gelieferte Signal $S_M$ und andererseits ein von der Kommunikations-einheit 12 geliefertes Signal $S_K$, das die Information darstellt, die über die Zweidrahtleitung 3 übertragen werden soll. Ferner empfängt die Steuerschaltung 14 eine Istwertspannung $U_i$, die an einem in die Zweidrahtleitung 3 eingefügten Widerstand 19 abgegriffen wird und somit dem Istwert des über die Zweidrahtleitung 3 fließenden Gesamtstroms proportional ist. Aufgrund dieser Eingangssignale liefert die Steuerschaltung 14 zum Steuereingang der Stromquelle 15 ein Steuersignal, das den von der Stromquelle 15 bestimmten Strom so einstellt, daß dieser dem vom Meßwertsignal $S_M$ angegebenen Meßwert in dem vorgegebenen Bereich zwischen 4 mA und 20 mA entspricht und daß diesem Strom ein symmetrischer Kommunikationsstrom überlagert ist, der das von der Kommunikationseinheit 12 gelieferte Kommunikationssignal $S_K$ wiedergibt. Dies ergibt den Signalstrom $I_S$, dem der symmetrische Kommunikationsstrom $I_K$ überlagert ist.

Es ist somit zu erkennen, daß außer dem Versorgungsstrom $I_V$ auch der Ergänzungsstrom $I_E$ und der Kommunikationsstrom $I_K$ über die Stromquelle 15 in die den Verbraucherkreis (Widerstand 18) speisende Versorgungsschaltung 13 fließt. Der Verbraucherkreis 18 nimmt nur den Versorgungsstrom $I_V$ auf, und der Ergänzungsstrom $I_E$ geht über die Z-Diode 16. Da der Kommunikationsstrom $I_K$ den Signalstrom $I_S$ zyklisch erhöht und erniedrigt, wird während der Stromerhöhung die Energie des Kommunikationsstroms im Kondensator 17 gespeichert und während der Stromerniedrigung diese gespeicherte Energie wieder abgegeben. Die dadurch erzielte vorteilhafte Wirkung ist aus dem Diagramm von Fig. 2 ersichtlich, das den Fall zeigt, daß der über die Zweidrahtleitung 3 übertragene Signalstrom $I_S$ den Kleinstwert von 4 mA hat, während für den Kommunikationsstrom $I_K$ eine Amplitude von 3,5 mA dargestellt ist. Da bei herkömmlichen Schaltungen der über die Zweidrahtleitung fließende Gesamtstrom stets größer sein muß als der Versorgungsstrom, müßte im dargestellten Fall der Versorgungsstrom $I_V$ kleiner als 0,5 mA sein; da dies im Normalfall nicht möglich ist, müßte die Amplitude des Kommunikationsstroms $I_K$ entsprechend verringert werden. Demgegenüber steht bei der Schaltung von Fig. 1 für den Versorgungsstrom $I_V$ nahezu der volle Kleinstwert von 4 mA zur Verfügung, und die Amplitude des Kommunikationsstrom $I_K$ kann ebenfalls diesen Wert nahezu erreichen.

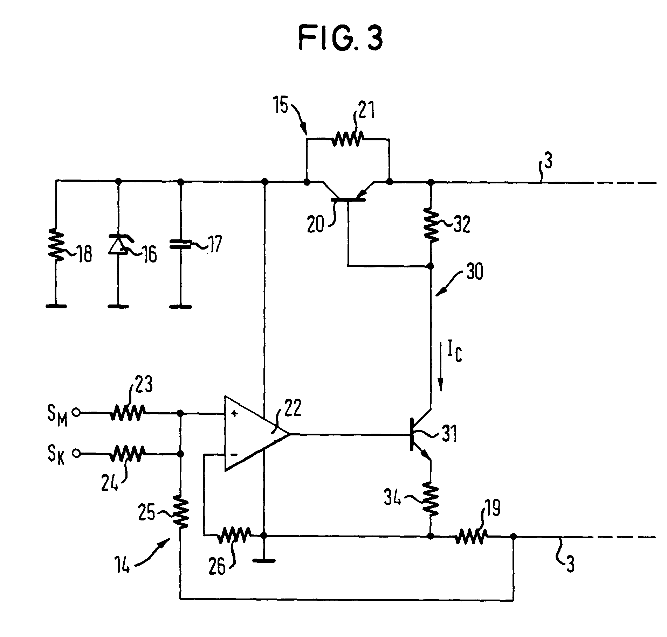

Figur 3 zeigt ein Ausführungsbeispiel der Stromquelle 15 und der Steuerschaltung 14, die in der Geberstelle 1 von Figur 1 enthalten sind. In Figur 3 sind auch die Z-Diode 16, der Kondensator 17, der Widerstand 18 und die zur Empfangsstelle führende Zweidrahtleitung 3 zu erkennen. Die Stromquelle 15 ist durch einen pnp-Transistor 20 gebildet, dessen Emitter-Kollektor-Strecke parallel zu einem Widerstand 21 in die Zweidrahtleitung eingefügt ist.

Die Steuerschaltung 14 enthält einen Operationsverstärker 22, der an seinem nichtinvertierenden Eingang das Meßwertsignal $S_M$ über einen Widerstand 23, das Kommunikationssignal $S_K$ über einen Widerstand 24 und die am Widerstand 19 abgegriffene Istwertspannung über einen Widerstand 25 empfängt. Der invertierende Eingang des Operationsverstärkers 22 ist über einen Widerstand 26 mit Masse verbunden.

Das Ausgangssignal des Operationsverstärkers 22 steuert den Strom in einem Nebenschlußzweig 30, der vor der Stromquelle 15 zwischen den beiden Leitern der Zweidrahtleitung 3 angeschlossen ist. Dieser Nebenschlußzweig enthält einen npn-Transistor 31, dessen Kollektor über einen in Reihe geschalteten Widerstand 32 mit dem einen Leiter der Zweidrahtleitung 3 verbunden ist und dessen Emitter über einen Widerstand 34 mit Masse verbunden ist, an die auch der andere Leiter der Zweidrahtleitung 3 über den Widerstand 19 angeschlossen ist. Die Basis des Transistors 31 ist mit dem Ausgang des Operationsverstärkers 22 verbunden. Dadurch wird der Transistor 31 so gesteuert, daß er in dem Nebenschlußzweig 30 einen Strom $I_C$ fließen läßt, der der Summe der dem Operationsverstärker 22 zugeführten Signale $S_M$ und $S_K$ entspricht. Der Nebenschlußzweig 30 ist hochohmig ausgebildet, so daß der Strom $I_C$ klein gegen den über die Zweidrahtleitung 3 fließenden Signalstrom $I_S$ ist. Der Kollektorstrom $I_C$ des Transistors 31 bildet den Steuerstrom zur Ansteuerung des Transistors 20, dessen Basis an den Verbindungspunkt zwischen dem Widerstand 32 und dem Kollektor des Transistors 31 angeschlossen ist. Dadurch wird der Transistor 20 so angesteuert, daß der durch die Stromquelle 15 bestimmte Strom den durch die Signale $S_M$ und $S_K$ bestimmten Wert und zeitlichen Verlauf hat.

An der in Figur 3 als Beispiel dargestellten Schaltung können natürlich verschiedene Abänderungen vorgenommen werden, die dem Fachmann geläufig sind. So kann zur Konstanthaltung der Betriebsspannung anstelle der Z-Diode 16 auch ein sogenannter Shunt-Regler eingesetzt werden. Desgleichen kann die steuerbare Stromquelle auch in anderer Weise als durch einen pnp-Transistor gebildet sein.

## Patentansprüche

1. Anordnung zur Signalübertragung zwischen einer Geberstelle (1) und einer Empfangsstelle (2), die miteinander durch eine Zweidrahtleitung (3) verbunden sind, über die einerseits der für den Betrieb der Geberstelle (1) erforderliche Versorgungsstrom ($I_V$) von der Empfangsstelle (2) zur Geberstelle (1) übertragen wird, und über die andererseits ein zwischen zwei Grenzwerten veränderlicher analoger Signalstrom ($I_S$) von der Geberstelle (1) zur Empfangsstelle (2) übertragen wird, der sich aus dem Versorgungsstrom ($I_V$)für die Geberstelle (1) und einem von der Geberstelle (1) bestimmten Ergänzungsstrom ($I_E$) zusammensetzt und dem ein symmetrischer Kommunikationsstrom ($I_K$) zur Übertragung von Kommunikations-Informationen zwischen der Geberstelle (1) und der Empfangsstelle (2) überlagert wird, wobei die Geberstelle (1) eine Versorgungsschaltung (13) aufweist, die einen Spannungsregler (16) zur Konstanthaltung der Betriebsspannung der Geberstelle (1) und einen Energiespeicher (17) zum Ausgleich von Strom- und/oder Spannungsschwankungen enthält, und in der Geberstelle (1) der Kommunikationsstrom (IK) dem von der Zweidrahtleitung (3) in die Versorgungsschaltung (13) fließenden Strom überlagert wird, dadurch gekennzeichnet, daß eine steuerbare Stromquelle (15) den gesamten von der Zweidrahtleitung (3) in die Versorgungsschaltung (13) fließenden Strom bestimmt.

2. Anordnung nach Anspruch 1, dadurch gekennzeichnet, daß die Geberstelle (1) eine Steuerschaltung (14) zur Steuerung der Stromquelle (15) durch ein Steuersignal enthält, das die zu übertragenden Kommunikations-Informationen enthält.

## Claims

1. An arrangement for signal transfer between a transmitting point (1) and a receiving point (2) connected to each other by a two-wire line (3), via which, on the one hand, the supply current ($I_V$) required for operating the transmitting point (1) is transmitted from the receiving point (2) to the transmitting point (1) and via which, on the other hand, an analog signal current ($I_S$) variable between two limiting values is transferred from the transmitting point (1) to the receiving point (2), which analog signal current is composed of the supply current ($I_V$) for the transmitting point (1) and a supplementary current ($I_E$) determined by the transmitting point (1) and which is superimposed by a symmetrical communication current ($I_K$) for the transfer of communication information between the transmitting point (1) and the receiving point (2), the transmitting point (1) comprising a supply circuit (13) which includes a voltage regulator (16) for maintaining the operating voltage of the transmitting point (1) constant and an energy storage (17) for compensating current and/or voltage fluctuations, and in the transmitting point (1) the communication current ($I_K$) being superimposed on the current flowing from the two-wire line (3) into the supply circuit (13), characterized in that a controllable current source (15) determines the total current flowing from the two-wire line (3) into the supply circuit (13).

2. The arrangement according to claim 1, characterized in that the transmitting point (1) includes a control circuit (14) for controlling the current source (15) by a control signal which includes the communication information to be transferred.

## Revendications

1. Dispositif destiné à la transmission de signaux entre un poste émetteur (1) et un poste récepteur (2), qui sont reliés l'un à l'autre par un câble à deux fils (3), lequel est utilisé, d'une part, pour transmettre du poste récepteur (2) vers le poste émetteur (1) le courant d'alimentation ($I_V$) nécessaire à l'exploitation du poste émetteur (1), et, d'autre part, pour transmettre du poste émetteur (1) vers le poste récepteur (2) un courant de signaux analogiques ($I_S$), susceptible de varier entre deux valeurs seuil, lequel est formé par le courant d'alimentation ($I_V$) au poste émetteur (1) et un courant complémentaire ($I_E$) déterminé par le poste émetteur (1) et auquel est superposé un courant de communication ($I_K$) symétrique destiné à transmettre des informations de communication entre le poste émetteur (1) et le poste récepteur (2), le poste émetteur (1) comportant un circuit d'alimentation (13) qui comprend un régulateur de tension (16) destiné à maintenir constante la tension d'exploitation du poste émetteur (1) et un accumulateur d'énergie (17) destiné à équilibrer les variations de courant et/ou de tension, et le courant de communication ($I_K$) étant superposé dans le poste émetteur (1) au courant transmis par le câble à deux fils (3) vers le circuit d'alimentation (13), caractérisé en ce qu'une source de courant réglable (15) détermine la totalité du courant transmis par le câble à deux fils (3) vers le circuit d'alimentation.

2. Dispositif selon la revendication 1, caractérisé en ce que le poste émetteur (1) comporte un circuit de commande (14) destiné à commander la source de courant (15) par l'intermédiaire d'un signal de commande, qui contient les informations de communication à transmettre.

FIG.1

# FIG. 2

# FIG. 3